# EUROPÄISCHE PATENTANMELDUNG

(11) **EP 1 911 695 A2**
(43) Veröffentlichungstag der Anmeldung: **16.04.2008**
(21) Anmeldenummer: 07118053.3
(22) Anmeldetag: 08.10.2007
(51) Int. Cl.: B65G 25/06

(54) **Verfahren zum Steuern des Gleichlaufs von wenigstens zwei Druckmittelzylindern sowie Gleichlaufsteuerung**

(30) Priorität: 09.10.2006 DE 102006048002
(71) Anmelder: MT-Energie GmbH & Co. KG, 27404 Rockstedt (DE)
(72) Erfinder: Martens, Christoph, 27404 Rockstedt (DE)
(74) Vertreter: von Ahsen, Erwin-Detlef

(57) **Zusammenfassung**

Die Erfindung betrifft ein Verfahren zum Steuern des Gleichlaufs von wenigstens zwei Druckmittelzylindern (17, 18), die jeweils einen in ein Zylindergehäuse geführten Kolben (19, 20) mit Kolbenstange (15, 16) sowie einen zum Betätigen der Kolbenstange (15, 16) mit Druckmittel beaufschlagbaren Druckräume (21, 22, 23, 24) über eine eigene Druckmittelleitung (25, 26, 27, 28) verfügen. Um auf einfache Weise ein Gleichlauf zwischen den Druckmittelzylinder (17, 18) zu erreichen, ist das erfindergemäße Verfahren dadurch gekennzeichnet, daß die relative Position der Kolbenstangen (15, 16) zueinander überwacht und bei Abweichungen von der Sollstellung die Druckmittelleitungen (25, 26, 27, 28) für den voreilenden Druckmittelzylinder (17, 18) gesperrt wird, bis die Sollposition wieder erreicht wird.

## Beschreibung

Die Erfindung betrifft ein Verfahren zum Steuern des Gleichlaufs von wenigstens zwei Druckmittelzylindern, die jeweils einen in ein Zylindergehäuse gefügten Kolben mit Kolbenstange sowie einen zum Betätigen der Kolbenstange mit Druckmittel beaufschlagbaren Druckraum aufweisen, wobei die Druckräume über eine eigene Druckmittelleitung verfügen. Darüber hinaus betrifft die Erfindung eine Gleichlaufsteuerung für wenigstens zwei in Abhängigkeit voneinander betätigte Druckmittelzylinder.

Die Erfindung bezieht sich insbesondere auf hydraulische Antriebe für Schubbodenbunker, wie sie beispielsweise in der DE 10 2004 040 731 A1 offenbart sind. Derartige Schubbodenbunker weisen zwei leiterartige Schubböden auf, die jeweils über zwei äußere Schubstangen verfügen, die durch mehrere rechtwinklig hierzu verlaufene Schubbodensprossen miteinander verbunden sind. An jeder Schubstange greift ein eigener Hydraulikzylinder an. Dabei kann es aufgrund von beispielsweise Fremdkörpern im Behälter oder anderen äußeren Einflüssen dazu kommen, daß eine ungleiche Kräfteverteilung an den Schubstangen gegeben ist.

Bei einer unkontrollierten Beaufschlagung der beiden Hydraulikzylinder mit Druckmittel kann es so zu einem Verziehen des Schubbodens kommen und dieser schlimmsten Falls sogar plastisch verformt oder sonst wie beschädigt werden. Um solche Beschädigungen an den Schubböden zu vermeiden, sind bisher die Schubböden zum Teil entsprechend stabil ausgebildet worden, so daß sie selbst ungünstigste, in der Praxis vorkommende Kräfteverteilungen standhalten. Darüber hinaus ist es bekannt, tannenbaumartige Schubböden einzusetzen, welche nur über eine mittlere Schubstange verfügen. Aber auch diese sind entsprechend stabil auszubilden, da aufgrund der freien Enden erhebliche Biegemomente auf die Sprossen einwirken. Beide Varianten führen also zu einer an sich ungerechtfertigten Überdimensionierung mit entsprechender Materialverschwendung. Ferner ist ihre Breite auf 2 m begrenzt, da die sonst auftretenden Kräfte nicht mehr beherrschbar wären.

Darüber hinaus sind mechanische Mengen- oder Stromteiler zur Ansteuerung von mehreren Druckmittelzylindern bekannt, welche einen Gleichlauf der Druckmittelzylinder erreichen sollen. Diese Teiler verfügen über eine sehr aufwendige Regelung und haben trotz des hohen technischen Aufwandes zulässige Fehlertoleranzen von 1 % bis 3 %. Diese Fehler summieren sich unter bestimmten Umständen sogar. Dieses tritt insbesondere dann auf, wenn die so angesteuerten Druckmittelzylinder nicht bei jedem Hub bis auf einen Anschlag bewegt werden.

Hiervon ausgehend liegt der Erfindung das Problem zugrunde, auf einfache und kostengünstige Weise den Gleichlauf zwischen wenigstens zwei in Abhängigkeit voneinander betätigten Druckmittelzylindern herzustellen. Dabei meint Gleichlauf nicht nur den exakten Synchronlauf von wenigstens zwei Druckmittelzylindern, sondern auch eine gewollte vorbestimmte Phasenverschiebung oder Vor- bzw. Nachteile zwischen diesen Druckmittelzylindern.

Zur Lösung dieses Problems ist das erfindungsgemäße Verfahren dadurch gekennzeichnet, daß die relative Position der Kolbenstangen zueinander überwacht und bei Abweichungen von der Sollstellung die Druckmittelleitung für den voreilenden Druckmittelzylinder gesperrt wird, bis die Sollposition wieder erreicht ist. Die erfindungsgemäße Gleichlaufsteuerung ist zur Lösung dieses Problems dadurch gekennzeichnet, daß einem der Kolben ein Positionssensor zugeordnet ist, welcher Abweichungen von der Sollposition des anderen Kolbens relativ zu diesem Kolben erfaßt, und das aufgrund der Signale des Positionssensors die Druckmittelversorgung der Druckmittelzylinder steuerbar ist.

Im Gegensatz zu den Mengen- oder Stromteilern, welche nur für eine möglichst gleichmäßige Verteilung der zugeführten Druckmittelvoluminar auf die angesteuerten Druckmittelzylinder sorgt und damit nur bei der Druckmittelversorgung selbst eingreift, wird erfindungsgemäß die Relativstellung der Kolbenstangen zueinander konkret erfaßt und dieses der Gleichlaufregelung zugrunde gelegt. Mit anderen Worten: bei der Erfindung wird der Gleichlauf zwischen den Kolbenstangen direkt gemessen, während bei den bekannten Mengen- oder Stromteilern der Gleichlauf nur indirekt über die zugeführten Druckmittelvoluminar bestimmt wird. Durch die erfindungsgemäße direkte Bestimmung lassen sich sehr viel einfachere Steuerungen vorsehen, die zudem genauer arbeiten. Auch ist es nicht mehr erforderlich, die Druckmittelzylinder immer zwischen zwei Anschlagstellungen hin- und herzufahren, da der Gleichlauf direkt ermittelt wird. Aufgrund der zuverlässigen Gleichlaufsteuerung nach der Erfindung sind auch Überdimensionierungen an den Schubböden nicht mehr erforderlich und Subböden von über 2 m Breite möglich.

Nach einer Weiterbildung der Erfindung sind zwei Positionssensoren vorgesehen, von denen einer einer voreilenden Position der anderen Kolbenstange und der andere Positionssensor der nacheilenden Position der anderen Kolbenstange zugeordnet ist. Auf diese reichen als Positionssensoren einfache An-/Aus-Schalter völlig aus, um die Gleichlaufsteuerung sicherzustellen. Darüber hinaus kann durch die Verwendung dieses Paares von Positionssensoren die zulässige Abweichung vom Gleichlauf der Kolbenstangen zueinander auf besonders einfache Weise durch den Abstand der Positionssensoren zueinander eingestellt werden.

Nach einer konstruktiven Weiterbildung der Erfindung sind die Positionssensoren an einer Gleichlaufstange angeordnet, welche vorzugsweise mit einer weiteren Gleichlaufstange an der anderen Kolbenstange zusammen wirkt.

Sollte aufgrund besonders unvorhergesehener Ereignisse es einmal dazu kommen, daß ein Gegenorgan, wie beispielsweise die andere Gleichlaufstange, an der anderen Kolbenstange den Bereich der Positionssensoren vollständig verlassen, wird nach einer Weiterbildung der Erfindung aus Sicherheitsgründen die Hydraulikversorgung für die Druckmittelzylinder vollständig abgeschaltet. Dieses kann akustisch oder optisch angezeigt werden, so daß die Störung durch das Bedienpersonal beseitigt werden kann.

Die Erfindung wird nachfolgend anhand eines in der Zeichnung dargestellten Ausführungsbeispiels näher erläutert. In der Zeichnung zeigt:

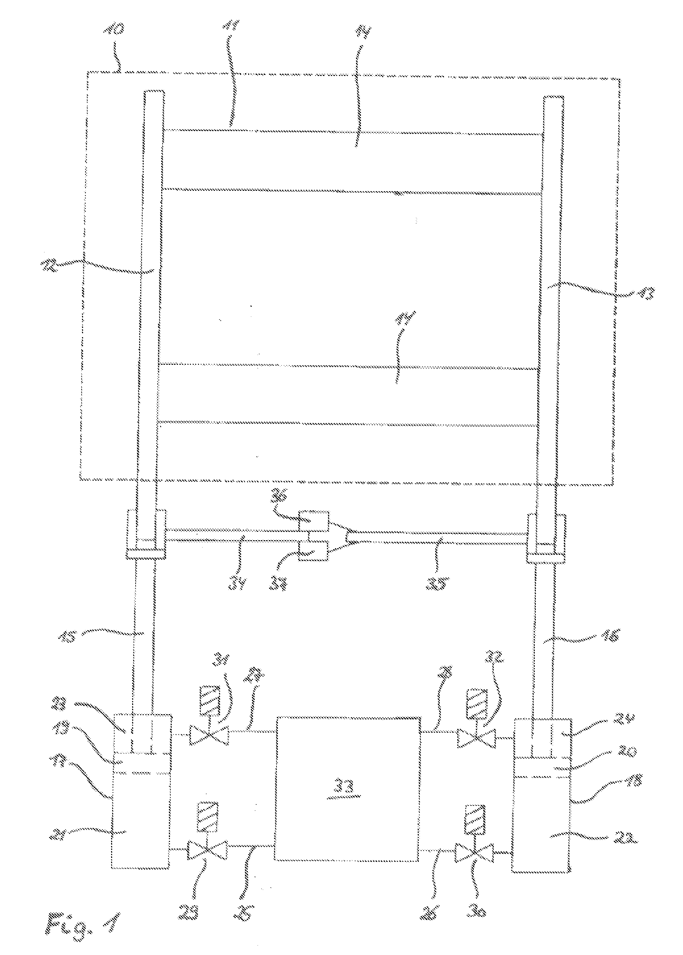

Fig.1 eine schematische Darstellung eines Schubbodenbunkers mit einer Gleichlaufsteuerung mit den Erfindungsmerkmalen.

Der in Fig. 1 gezeigte Schubbodenbunker 10 weist einen Schubboden 11 aus zwei äußeren Schubstangen 12, 13 auf, welche durch Sprossen 14 miteinander verbunden sind. An jeder der Schubstangen 12, 13 greift eine Kolbenstange 15, 16 eines Druckmittelzylinders 17, 18 an. Die Druckmittelzylinder 17, 18 sind doppelt wirkend ausgebildet, so daß ein mit der Schubstange 15, 16 verbundener Kolben 19, 20 zwei Druckräume 21, 22 einerseits und 23, 24 andererseits voneinander abtrennt. Werden die Druckräume 21, 22 der beiden Druckmittelzylinder 17, 18 mit Druckmittel beaufschlagt, wird die jeweilige Kolbenstange 15, 16 ausgefahren, während bei einer Beaufschlagung der Druckräume 23, 24 die jeweilige Kolbenstange 15, 16 eingefahren wird. Jeder dieser Druckräume 21, 22, 23, 24 verfügt über eine eigene Druckmittelzuleitung 25, 26, 27, 28. In jeder dieser Druckmittelleitungen 25, 26, 27, 28 ist ein hydraulisches Ventil 29, 30, 31, 32 angeordnet, welches die jeweils zugehörige Druckmittelleitung 25, 26, 27, 28 öffnet oder schließt. Alle Druckmittelleitungen 25, 26, 27, 28 sind an eine gemeinsames Hydraulikaggregat 33 angeschlossen.

Jeder der Kolbenstangen 15, 16 und damit der Schubstangen 12, 13 ist eine Gleichlaufstange 34, 35 zugeordnet. Der Gleichlaufstange 34 sind zwei Positionsschalter 36, 37 zugeordnet. Befindet sich die andere Gleichlaufstange 35, wie in Fig. 1 gezeigt, genau zwischen den Positionsschaltern 36, 37, geben diese Positionsschalter 36, 37 kein Signal ab. Eilt die Kolbenstange 16 der Kolbenstange 15 jedoch vor, so daß in der Darstellung gemäß Fig. 1 die Gleichlaufstange 35 oberhalb der Gleichlaufstange 34 angeordnet ist, spricht der Positionssensor 36 an. Ist jedoch umgekehrt in der Darstellung gemäß Fig. 1 die Gleichlaufstange 34 oberhalb der Gleichlaufstange 35 verordnet, spricht der Positionssensor 37 an. Aufgrund der Signale der Positionssensoren 36, 37 wird die Hydraulikversorgung für den gerade voreilenden Druckmittelzylinder 17, 18 unterbrochen, bis die Gleichlaufstangen 34, 35 wieder auf gleicher Höhe zueinander sind. Dieses wird nachstehend anhand einiger Beispiele verdeutlicht:

Werden beide Kolbenstangen 15, 16 ausgefahren, also die Druckräume 21, 22 durch öffnen der Ventile 29, 30 mit Druckmittelbeaufschlagt, wird der Schubboden 11 in der Darstellung gemäß Fig. 1 nach oben bewegt. Ist dabei die Gleichlaufstange 34 in der Darstellung gemäß Fig. 1 oberhalb der Gleichlaufstange 35 angeordnet, eilt die Kolbenstange 15 vor. Dementsprechend spricht der Positionssensor 37 an und sperrt die Druckmittelversorgung für den Druckraum 21 durch Schließen des Ventils 29 in der Druckmittelleitung 25. Sobald die Gleichlaufstangen 34, 35 wieder auf gleicher Höhe sind, gibt der Positionssensor 37 kein Signal mehr ab und das Ventil 29 wird wieder geöffnet. Umgekehrt wird bei einem Voreilen der Kolbenstange 16, bei welcher die Gleichlaufstange 35 oberhalb der Gleichlaufstange 34 angeordnet ist, der Positionssensor 36 ansprechen und durch Schließen des Ventils 30 die Druckmittelversorgung für die Druckleitung 22 geschlossen bis beide Gleichlaufstangen 34, 35 wieder auf gleicher Höhe sind.

Auf analoge Weise erfolgt auch eine Gleichlaufsteuerung bei einem Einfahren der Kolbenstangen 15, 16 in die Druckmittelzylinder 17, 18 durch Beaufschlagen der Druckräume 23, 24 mit Druckmittel durch öffnen der Ventile 31, 32; also dann, wenn der Schubboden 11 in der Darstellung gemäß Fig. 1 nach unten bewegt wird. In diesem Fall wird bei einem Voreilen der Kolbenstange 15 die Gleichlaufstange 34 unterhalb der Gleichlaufstange 35 angeordnet sein, so daß der Positionssensor 36 anspricht. In diesem Fall wird das Ventil 31 in der Druckmittelleitung 27 geschlossen und damit der Druckraum 23 von der Druckmittelversorgung abgekoppelt, bis der Gleichlauf wiederhergestellt ist. Entsprechend wird bei Voreilen der Kolbenstange 16 die Gleichlaufstange 35 unterhalb der Gleichlaufstange 34 angeordnet sein und der Positionssensor 37 ansprechen, so daß dann das Ventil 32 in der dem Druckraum 24 zugeordneten Druckmittelleitung 28 geschlossen wird.

Sollte es, aus welchen Gründen auch immer, einmal zu einer so heftigen Störung kommen, daß die andere Gleichlaufstange 35 die Position der Positionssensoren 36, 37 vollständig verläßt, werden alle Ventile 29, 30, 31, 32 geschlossen und gegebenenfalls das Hydraulikaggregat 23 abgeschaltet.

Über die Abstände der Positionssensoren 36, 37 läßt sich die zulässige Toleranz der Abweichung des Gleichlaufs, also der maximale Versatz zwischen den Gleichlaufstangen 34, 35 einstellen. Beispielsweise über Traversen an einer der Gleichlaufstangen 34, 35 oder dergleichen kann auch ein gewolltes Vor- oder Nacheilen eines der Kolbenstangen 15, 16 eingestellt werden. Durch Verwendung von zwei Gleichlaufstangen an einer der Kolbenstangen 15, 16 lassen sich auch gewollte Phasenverschiebungen zwischen den Bewegungen der Kolbenstangen 15, 16 einstellen, indem von den beiden einer der Kolbenstangen 15, 16 zugeordneten Gleichlaufstangen 34, 35 immer nur eine Gleichlaufstange für die Einfahrbewegung und die andere Kolbenstange für die Ausfahrbewegung herangezogen wird.

### Bezugszeichenliste:

- 10: Schubbodenbunker
- 11: Schubboden
- 12: Schubstange
- 13: Schubstange
- 14: Sprosse
- 15: Kolbenstange
- 16: Kolbenstange
- 17: Druckmittelzylinder
- 18: Druckmittelzylinder
- 19: Kolben
- 20: Kolben
- 21: Druckraum
- 22: Druckraum
- 23: Druckraum
- 24: Druckraum
- 25: Druckmittelleitung
- 26: Druckmittelleitung
- 27: Druckmittelleitung
- 28: Druckmittelleitung
- 29: Ventil
- 30: Ventil
- 31: Ventil
- 32: Ventil
- 33: Hydraulikaggregat
- 34: Gleichlaufstange
- 35: Gleichlaufstange
- 36: Positionssensor
- 37: Positionssensor

## Patentansprüche

1. Verfahren zum Steuern des Gleichlaufs von wenigstens zwei Druckmittelzylindern (17, 18), die jeweils einen in ein Zylindergehäuse geführten Kolben (19, 20) mit Kolbenstange (15, 16) sowie einen zum Betätigen der Kolbenstange (15, 16) mit Druckmittel beaufschlagbaren Druckraum (21, 22, 23, 24) aufweisen, wobei die Druckräume (21, 22, 23, 24) über eine eigene Druckmittelleitung (25, 26, 27, 28) verfügen, **dadurch gekennzeichnet , daß** die relative Position der Kolbenstangen (15, 16) zueinander überwacht und bei Abweichungen von der Sollstellung die Druckmitteilleitung (25, 26, 27, 28) für den voreilenden Druckmittelzylinder (17, 18) gesperrt wird, bis die Sollposition wieder erreicht ist.

2. Verfahren nach Anspruch 1, **dadurch gekennzeichnet, daß** die relative Position der Kolbenstangen (15, 16) zueinander über zwei Positionsschalter (36, 37) überwacht und die zulässige Abweichung der Kolbenstangen (15, 16) vom Gleichlauf über den Abstand der beiden Positionsschalter (36, 37) zueinander eingestellt wird.

3. Verfahren nach Anspruch 1 oder 2, **dadurch gekennzeichnet, daß** bei einer Abweichung der relativen Position der Kolbenstangen (15, 16) zueinander außerhalb des Meßbereichs eines Positionssensors (36, 37) alle Druckmittelleitungen (25, 26, 27, 28) gesperrt werden.

4. Gleichlaufsteuerung für zwei oder mehr in Abhängigkeit voneinander betätigte Druckmittelzylinder (17, 18), die jeweils einen in einem Zylindergehäuse geführten Kolben (19, 20) mit Kolbenstange (15, 16) sowie einen zum Betätigen der Kolbenstange (15, 16) mit Druckmittel beaufschlagbaren Druckraum (21, 22, 23, 24) aufweisen, wobei die Druckräume (21, 22, 23, 24) über eine eigene Druckmittelleitung (25, 26, 27, 28) verfügen, **dadurch gekennzeichnet, daß** einer der Kolbenstangen (15) ein Positionssensor (36, 37) zugeordnet ist, welcher Abweichungen von der Sollposition des anderen Kolbens (17) relativ zum ersten Kolben (15) erfaßt, und das aufgrund der Signale des Positionssensors (36, 37) die Druckmittelversorgung der Druckmittelzylinder (17, 18) steuerbar ist.

5. Gleichlaufsteuerung nach Anspruch 4, **dadurch gekennzeichnet, daß** der ersten Kolbenstange (15) ein Paar von Positionssensoren (36, 37) zugeordnet ist, von denen der eine Positionssensor (36) ein Voreilen der anderen Kolbenstange (16) und der andere Positionssensor (37) ein Nacheilen der anderen Kolbenstange (16) erfaßt.

6. Gleichlaufsteuerung nach Anspruch 4 oder 5, **dadurch gekennzeichnet, daß** eine zulässige Abweichung vom Gleichlauf zwischen den Kolbenstangen (15, 16) über den Abstand der Positionssensoren (36, 37) zueinander einstellbar ist.

7. Gleichlaufsteuerung nach einem der Ansprüche 4 bis 6, **dadurch gekennzeichnet, daß** den Druckmittelleitungen (25, 26, 27, 28) jeweils ein Ventil (29, 30, 31, 32) zugeordnet ist, welche auf Grund der Signale des Positionssensors (36, 37) öffnen- oder schließbar sind.

8. Gleichlaufsteuerung nach einem der Ansprüche 4 bis 7, **dadurch gekennzeichnet, daß** an einer der Kolbenstangen (15) eine mit den Positionssensoren (36, 37) versehene Gleichlaufstange (34) angeordnet ist.

9. Gleichlaufsteuerung nach Anspruch 8, **dadurch gekennzeichnet, daß** der anderen Kolbenstange (16) eine weitere Gleichlaufstange (35) zugeordnet ist, welche mit den Positionssensoren (36, 37) zusammenwirkt.
